(19)

Europäisches
Patentamt
European
Patent Office
Office européen
des brevets

(11) **EP 2 509 307 A1**

(12) **EUROPEAN PATENT APPLICATION**
published in accordance with Art. 153(4) EPC

(43) Date of publication:
**10.10.2012 Bulletin 2012/41**

(21) Application number: **10834327.8**

(22) Date of filing: **30.03.2010**

(51) Int Cl.:
***H04N 7/01*** (2006.01)  ***G09G 3/20*** (2006.01)

(86) International application number:
**PCT/JP2010/002316**

(87) International publication number:
**WO 2011/067870 (09.06.2011 Gazette 2011/23)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **01.12.2009 JP 2009274012**

(71) Applicant: **Panasonic Corporation
Kadoma-shi
Osaka 571-8501 (JP)**

(72) Inventor: **NOZAWA, Kazushi
Osaka-shi, Osaka 540-6207 (JP)**

(74) Representative: **Kügele, Bernhard
Novagraaf International SA
3 chemin de l'Echo
1213 Onex Geneva (CH)**

(54) **IMAGE PROCESSING DEVICE AND IMAGE PROCESSING METHOD**

(57)    An interpolated picture with suppressed picture deterioration and with a smooth motion is generated.

An image processing apparatus (11) for generating an interpolated picture interpolated between two temporally successive original pictures includes: a motion vector estimation unit (11) configured to estimate for each block a motion vector between the two original pictures; a compensation strength determination unit (12) configured to determine motion compensation strength for specifying an interpolation phase in accordance with a degree of reliability of the estimated motion vector; and an interpolated picture generation unit (13) configured to generate the interpolated picture by performing motion compensation processing on at least one of the two original pictures, using the interpolation phase specified according to the determined motion compensation strength and the estimated motion vector, wherein the compensation strength determination unit (12) is configured to determine the motion compensation strength in a manner such that the interpolation phase approaches closer to one of phases of the two original pictures with a decrease in the reliability.

FIG. 1

## Description

[Technical Field]

The present invention relates to an image processing apparatus and an image processing method generating an interpolated picture interpolated between two temporally successive original pictures included in a moving picture, and more specifically to an image processing apparatus and an image processing method generating an interpolated picture by performing motion compensation processing by using a motion vector.

[Background Art]

As a technology for displaying a moving picture, there is frame rate conversion processing of increasing the number of frames or the number of fields by generating an interpolated picture between frames or between fields of a picture signal.

Known as methods of generating the interpolated picture are: for example, a method of generating as the interpolated picture a picture identical to the frame or the field simply included in the moving picture (hereinafter called "original picture") and a method of generating the interpolated picture by linear interpolation processing between the frames or the fields. However, in the case where the interpolated picture is generated by such a method, for example, a problem that an unnatural motion called jerkiness or judder occurs in the moving picture after subjected to the frame rate conversion processing.

As a method of improving such a problem, there is a method of generating an interpolated picture by performing motion compensation processing by use of a motion vector called motion compensation type interpolation processing (for example, see Patent Document 1). In a case where an interpolated picture has been generated by such motion compensation type interpolation processing, a moving picture without jerkiness or judder and with a natural and smooth motion can be obtained.

[Citation List]

[Patent Literature]

[PTL 1] International Publication No. 2008/102826

[Summary of Invention]

[Technical Problem]

A motion vector used in this motion compensation type interpolation processing indicates a motion state of a picture. Moreover, the motion vector is estimated by using, for example, a block matching method.

In the block matching method, a target picture is first divided into a plurality of blocks each composed of one or more pixels. Then selected from among the plurality of divided blocks is a focused block for which motion is to be estimated. Subsequently, evaluated is a degree of correlation between the selected focused block and each of a plurality of candidate regions (hereinafter called as "candidate blocks") in a predetermined search range in a temporally former frame or a temporally latter frame than the target picture. Finally, the most highly correlated candidate block included in those candidate blocks is determined, and displacement between the candidate block and the focused block is estimated as the motion vector.

Such a block matching method or the like may not effectively detect a correct motion vector to be originally estimated in a picture with regions having mutually different motions, for example, a picture in which an object and a background move in different directions. Especially in a case where the object and the background move in different directions, the correct motion vector to be originally estimated cannot be estimated in, for example, a border region of this object in many cases.

Moreover, as a result of limitation imposed on a size of the search range due to limitation of hardware resources, etc., the motion indicated by the estimated motion vector may not match an actual motion.

In such a case, performing motion compensation processing by using the estimated motion vector may greatly deteriorate the interpolated picture. Moreover, such deterioration in the interpolated picture occurs at a border of an object, a border of a screen, etc. in many cases.

As a method of reducing such deterioration, there is, for example, a method of not using the motion vector or a method of perform ing filtering processing. More specifically, for example, there is a method of generating the same picture as a picture included in an original picture as all or part of the interpolated picture, or a method of generating the interpolated picture by linear interpolation processing between frames or between fields. When the interpolated picture is generated by these methods, a problem that all or part of the moving picture has an uncontinuous or unclear motion arises.

The invention solves the conventional problem described above, and it is an object of the invention to provide an image processing apparatus capable of generating an interpolated picture with suppressed picture deterioration and with a smooth motion.

[Solution to Problem]

To achieve the object described above, an image processing apparatus according to one aspect of the invention for generating an interpolated picture interpolated between two temporally successive original pictures included in an inputted moving picture, includes: a motion vector estimation unit configured to estimate for each block a motion vector between the two temporally successive original pictures; a compensation strength determination unit configured to calculate a degree of reliability of the motion vector estimated by the motion vector determination unit, and determine, in accordance with the calculated degree of reliability, motion compensation strength for specifying an interpolation phase as a phase of the interpolated picture to be generated; and an interpolated picture generation unit configured to generate the interpolated picture by performing motion compensation processing on at least one of the two original pictures, using the interpolation phase specified according to the motion compensation strength determined by the compensation strength determination unit and the motion vector estimated by the motion vector estimation unit, wherein the compensation strength determination unit is configured to determine the motion compensation strength in a manner such that the interpolation phase approaches closer to one of phases of the two original pictures with a decrease in the calculated degree of reliability.

As a result, the interpolation phase can be brought closer to the phase of the original picture with a decrease in the reliability of the motion vector, which can suppress picture deterioration. On the other hand, with an increase in the reliability of the motion vector, the interpolation phase is not brought closer to the phase of the original picture, which can smoothen a picture motion. Moreover, the motion compensation strength for specifying the interpolation phase can be determined in accordance with the reliability of the motion vector, which makes it possible to generate an interpolated picture adaptively to the inputted moving picture.

Preferably, the compensation strength determination unit is configured to calculate, as the degree of reliability, a degree of change between the motion vector estimated for the focused block included in either one of the two original pictures and the motion vector estimated for at least one of the blocks located around the focused block.

As a result, the degree of change between the motion vector of the focused block and the motion vector of the blocks located around the focused block can be calculated as the degree of reliability, which permits calculation of the degree of reliability of the motion vector with high accuracy. Then determining the motion compensation strength in accordance with the degree of reliability calculated with high accuracy in this manner permits generation of an interpolated picture with suppressed picture deterioration and with a smooth motion.

Preferably, the compensation strength determination unit is configured to calculate, as the degree of reliability, a degree of non-approximation between the block, corresponding to a start point of the motion vector, included in either one of the two original pictures and the block, corresponding to an end point of the motion vector, included in the other one of the two original pictures.

As a result, the degree of non-approximation between the blocks located at the start point and the end point of the motion vector can be calculated as the degree of reliability, which permits calculation of the degree of reliability of the motion vector with high accuracy. Then determining the motion compensation strength in accordance with the degree of reliability calculated with high accuracy in this manner permits generation of an interpolated picture with suppressed picture deterioration and with a smooth motion.

Preferably, the compensation strength determination unit is configured to calculate, as the degree of reliability, a sum of (i) a degree of change between the motion vector estimated for the focused block included in either one of the two original pictures and the motion vector estimated for at least one of the blocks located around the focused block and (ii) a degree of non-approximation between the block corresponding to the start point of the motion vector included in one of the two original pictures and the block corresponding to the end point of the motion vector included in another one of the two original pictures.

As a result, the degree of reliability reflecting two mutually different reasons of deterioration in the reliability of the motion vector can be calculated, which permits calculation of the degree of reliability of the motion vector with high accuracy. Determining the motion compensation strength in accordance with the degree of reliability calculated with high accuracy in this manner permits generation of an interpolated picture with suppressed picture deterioration and with a smooth motion.

Preferably, the compensation strength determination unit is configured to determine the motion compensation strength for each block, and the interpolated picture generation unit is configured to generate the interpolated picture by performing motion compensation processing for each block by using the determined motion compensation strength.

As a result, the interpolated picture can be generated while changing the interpolation phase for each block, which permits adaptive generation of an interpolated picture with suppressed picture deterioration and with a smooth motion.

Preferably, the compensation strength determination unit is configured to determine the motion compensation strength by performing spatial filtering processing upon determining the motion compensation strength in a manner such that a difference in the motion compensation strength between the adjacent blocks becomes smaller.

As a result, a sudden change in the motion compensation strength between the focused block and the blocks located around the focused block can be suppressed, suppressing picture deterioration.

Preferably, the compensation strength determination unit is configured to determine the motion compensation strength in a manner such that the interpolation phase approaches closer to the phase of one of the two original pictures closer to the proper phase with a decrease in the calculated degree of reliability, and the proper phase is a phase logically calculated based on a frame rate before conversion and a frame rate after the conversion.

As a result, the interpolation phase can be brought closer to the phase of the original picture closer to the proper phase with a decrease in the reliability of the motion vector, which can further suppress the picture deterioration.

Preferably, the compensation strength determination unit is configured to further obtain scroll information indicating possibility that the picture is scrolling in a partial or entire region of the two original pictures, and determine again the motion compensation strength in a manner such that the interpolation phase approaches closer to the proper phase than to the interpolation phase specified by the determined motion compensation strength with an increase in the possibility indicated by the obtained scroll information.

As a result, the motion compensation strength of a region where the picture is scrolling can be determined again as motion compensation strength specifying as the interpolation phase a phase closer to the proper phase than to the interpolation phase determined in accordance with the degree of reliability of the motion vector. Therefore, in the moving picture after the conversion, a motion of the scrolling picture can be smoothened.

Preferably, the compensation strength determination unit is configured to further obtain telop information indicating possibility that a telop is displayed in a moving manner in a partial or entire region of the two original pictures, and determine again the motion compensation strength in a manner such that the interpolation phase approaches closer to the proper phase than to the interpolation phase specified by the determined motion compensation strength with an increase in the possibility indicated by the obtained telop information.

As a result, the motion compensation strength of a region where a telop is displayed in a moving manner can be determined again as motion compensation strength specifying as the interpolation phase a phase closer to the proper phase than to the interpolation phase determined in accordance with the degree of reliability of the motion vector. Therefore, in the moving picture after the conversion, the telop motion can be smoothened.

The invention can be realized not only as such an image processing apparatus but also as an image processing method having characteristic processing steps included in the image processing apparatus. Moreover, the invention can also be realized as a program making the computer execute each of the characteristic steps included in such an image processing method. Then it is needless to say that such a program can circulates through the recording medium such as a CD-ROM and a transfer medium such as the Internet.

Moreover, the invention can be realized as a semiconductor integrated circuit (LSI: Large Scale Integration) that realizes part or all of functions of such an image processing apparatus, or can also be realized as an image display device such as a digital TV that includes such an image processing apparatus.

[Advantageous Effects of Invention]

With an image processing apparatus according to one aspect of the invention, the interpolated picture with suppressed picture deterioration and with a smooth motion can be generated.

[Brief Description of Drawings]

[FIG. 1] FIG. 1 is a block diagram showing functional configuration of an image processing apparatus according to a first embodiment of the present invention.
[FIG. 2] FIG. 2 is a flowchart showing a flow of processing performed by the image processing apparatus according to the first embodiment of the invention.
[FIG. 3] FIG. 3 is a diagram showing one example of relationship between an absolute difference value and a degree of change according to the first embodiment of the invention.
[FIG. 4] FIG. 4 is a diagram showing one example of relationship between the degree of change and motion compensation strength according to the first embodiment of the invention.

[FIG. 5] FIG. 5 is a diagram illustrating filtering processing performed by the image processing apparatus according to the first embodiment of the invention.

[FIG. 6] FIG. 6 is a diagram illustrating relationship between the motion compensation strength and an interpolation phase where a proper phase is "0.4" according to the embodiments of the invention.

[FIG. 7] FIG. 7 is a diagram illustrating relationship between the motion compensation strength and the interpolation phase where the proper phase is "0.6" according to the embodiments of the invention.

[FIG. 8] FIG. 8 is a diagram schematically illustrating processing of generating an interpolated picture by the image processing apparatus according to the first embodiment of the invention.

[FIG. 9A] FIG. 9A is a diagram illustrating an interpolated picture generated by the image processing apparatus according to the first embodiment of the invention.

[FIG. 9B] FIG. 9B is a diagram illustrating an interpolated picture generated by the image processing apparatus according to the first embodiment of the invention.

[FIG. 10A] FIG. 10A is a diagram illustrating one example of the relationship between the absolute difference value and the degree of change according to the first embodiment of the invention.

[FIG. 10B] FIG. 10B is a diagram showing one example of the relationship between the absolute difference value and the degree of change according to the first embodiment of the invention.

[FIG. 11A] FIG. 11A is a diagram showing one example of the relationship between the absolute difference value and the degree of change according to the first embodiment of the invention.

[FIG. 11B] FIG. 11B is a diagram showing one example of the relationship between the absolute difference value and the degree of change according to the first embodiment of the invention.

[FIG. 12] FIG. 12 is a block diagram showing functional configuration of an image processing apparatus according to a second embodiment of the invention.

[FIG. 13] FIG. 13 is a diagram showing one example of relationship between a correlation value and a degree of non-approximation according to the second embodiment of the invention.

[FIG. 14] FIG. 14 is a diagram showing one example of relationship between the degree of non-approximation and motion compensation strength according to the second embodiment of the invention.

[FIG. 15A] FIG. 15A is a diagram showing one example of relationship between the correlation value and the degree of non-approximation according to the second embodiment of the invention.

[FIG. 15B] FIG. 15B is a diagram showing one example of the relationship between the correlation value and the degree of non-approximation according to the second embodiment of the invention.

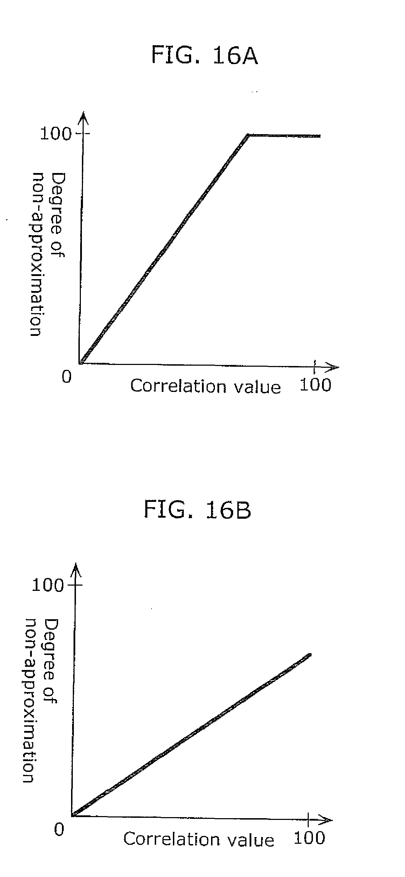

[FIG. 16A] FIG. 16A is a diagram showing one example of the relationship between the correlation value and the degree of non-approximation according to the second embodiment of the invention.

[FIG. 16B] FIG. 16B is a diagram showing one example of the relationship between the correlation value and the degree of non-approximation according to the second embodiment of the invention.

[FIG. 17] FIG. 17 is a block diagram showing functional configuration of an image processing apparatus according to the third embodiment of the invention.

[FIG. 18] FIG. 18 is a block diagram showing functional configuration of an image processing apparatus according to the fourth embodiment of the invention.

[FIG. 19] FIG. 19 is a flow chart showing a flow of processing performed by the image processing apparatus according to the fourth embodiment of the invention.

[FIG. 20A] FIG. 20A is a diagram illustrating processing of determining again motion compensation strength by a compensation strength determination unit according to the fourth embodiment of the invention.

[FIG. 20B] FIG. 20B is a diagram illustrating the processing of determining again the motion compensation strength by the compensation strength determination unit according to the fourth embodiment of the invention.

[Description of Embodiments]

Hereinafter, embodiments of an image processing apparatus according to one aspect of the present invention will be described in detail with reference to the accompanying drawings.

All numbers indicated below are just illustrative for a detailed description of the invention, and thus the invention is not limited to the illustrated numbers.

The embodiments below are configured with at least one of hardware and software, but the configuration with the hardware may also be configured with software and the configuration with the software may also be configured with hardware.

[Embodiment 1]

Hereinafter, the first embodiment of the invention will be described with reference to the drawings.

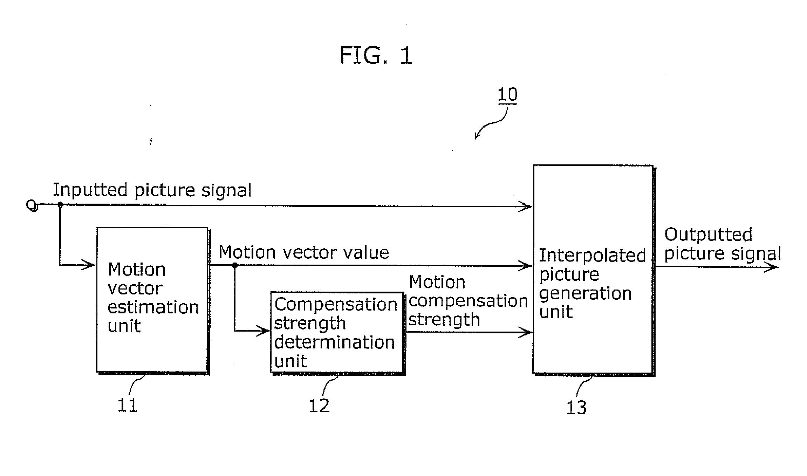

FIG. 1 is a block diagram showing functional configuration of the image processing apparatus according to the first embodiment of the invention.

The image processing apparatus 10 is an apparatus that generates an interpolated picture interpolated between two temporally successive original pictures included in an inputted moving picture. The moving picture may be on an individual frame basis or on an individual field basis. In a case where the moving picture is on an individual frame basis, the original picture means a frame picture, and in a case where the moving picture is on an individual field basis, the original picture means a field picture.

As shown in FIG. 1, the image processing apparatus 10 includes: a motion vector estimation unit 11, a compensation strength determination unit 12, and an interpolated picture generation unit 13.

The motion vector estimation unit 11 estimates for each block a motion vector between two temporally successive original pictures.

The compensation strength determination unit 12 calculates a degree of reliability of the motion vector, and determines motion compensation strength in accordance with the calculated degree of reliability. Moreover, the compensation strength determination unit 12 determines the motion compensation strength in a manner such that an interpolation phase approaches closer to one of phases of the two original pictures closer to a proper phase with a decrease in reliability indicated by the calculated degree of reliability.

The motion compensation strength is a value for specifying the interpolation phase as a phase of an interpolated picture. The phase is a value indicating temporal position of the picture. The interpolation phase is a value indicating a temporal position of the interpolated picture.

With an increase in a phase difference between the interpolation phase and the phase of the original picture, the interpolated picture to be generated by motion compensation processing to be described below is more greatly moved from the original picture. Therefore, the motion compensation strength can be said to be a value indicating a degree of matching between the original picture and the interpolated picture. The interpolation phase is a value used for generating an interpolated picture, and may be different from a phase with which the interpolated picture is displayed.

The proper phase is a phase logically calculated based on a ratio between a frame rate before conversion and a frame rate after the conversion, and is a phase indicating temporal position where pictures included in a moving picture after the frame rate conversion are successive at equal intervals.

The interpolated picture generation unit 13, by using the interpolation phase specified by the motion compensation strength and the motion vector, performs the motion compensation processing by using at least one of the two original pictures to thereby generate an interpolated picture.

Next, various operations performed in the image processing apparatus 10 configured as described above will be described.

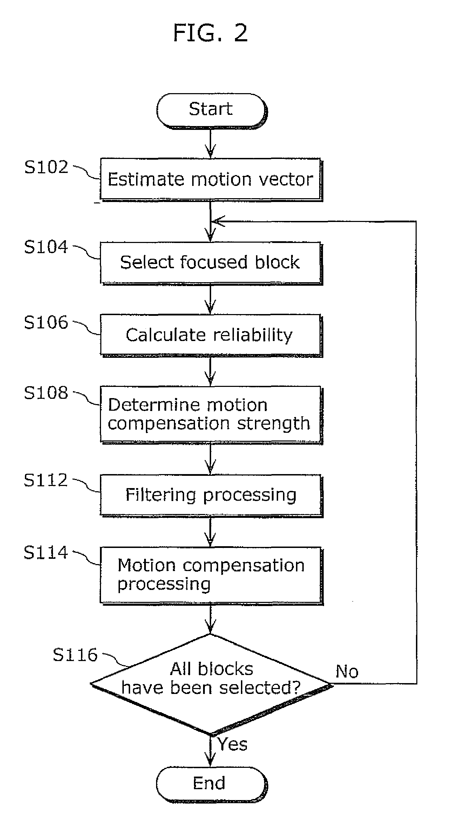

FIG. 2 is a flow chart showing a flow of processing performed by the image processing apparatus according to the first embodiment of the invention.

First, the motion vector estimation unit 11 estimates a motion vector for each of blocks of an original picture included in an inputted moving image indicated by an inputted picture signal (S102). Moreover, the motion vector estimation unit 11 outputs the estimated motion vector to the compensation strength determination unit 12 and the interpolated picture generation unit 13.

Subsequently, the compensation strength determination unit 12 selects as a focused block a block which is included in a picture subjected to the processing and for which the following processing (S106 to S114) has not yet been performed (S104). Then the compensation strength determination unit 12 calculates a degree of reliability indicating reliability of the motion vector of the focused block (S106). The compensation strength determination unit 12 determines motion compensation strength in a manner such that an interpolation phase approaches closer to a phase of the original picture with a decrease in the reliability indicated by the calculated degree of reliability (S108).

Next, the compensation strength determination unit 12 performs spatial filtering processing on the motion compensation strength in a manner such that a difference in the motion compensation strength between the adjacent blocks becomes small (S112). Then the compensation strength determination unit 12 outputs the motion compensation strength after the filtering processing to the interpolated picture generation unit 13.

The interpolated picture generation unit 13 performs the motion compensation processing by using the motion vector adjusted in accordance with the interpolation phase specified for each block based on the motion compensation strength and using the focused block (S114).

Then the compensation strength determination unit 12 determines whether or not all the blocks included in the picture subjected to the processing have been selected as the focused block (S116). Here, if not all the blocks have been selected as the focused block (No in S116), the compensation strength determination unit 12 repeats the processing from step S104 again. On the other hand, if all the blocks have been selected as the focused block (Yes in S116), the image processing apparatus 10 ends the processing of generating an interpolated picture.

As described above, the interpolated picture generation unit 13 repeats the motion compensation processing for each block to thereby generate an interpolated picture. Then by inserting the interpolated picture generated in this manner between the two temporally successive original pictures, an outputted picture signal indicating an outputted moving picture is outputted.

In this embodiment, the interpolated picture generation unit 13 performs the motion compensation processing every time the motion compensation strength has been determined, but the motion compensation processing may be performed only once after the motion compensation strength is determined for all of the blocks.

Next, the processing (S1 02 to S114 of FIG. 2) performed by the motion vector estimation unit 11, the compensation strength determination unit 12, and the interpolated picture generation unit 13 will be described in detail below.

First, the processing (S102 of FIG. 2) of estimating the motion vector by the motion vector estimation unit 11 will be described in detail.

The motion vector estimation unit 11 divides into a plurality of blocks the original picture included in the inputted moving picture indicated by the inputted picture signal as a picture signal inputted to the image processing apparatus 10. Then the motion vector estimation unit 11 estimates for each divided block the motion vector between the two temporally successive original pictures. Moreover, the motion vector estimation unit 11 outputs to the compensation strength determination unit 12 and the interpolated picture generation unit 13 a motion vector value indicating magnitude and a direction of the estimated motion vector.

Specifically, the motion vector estimation unit 11, based on a block matching method, estimates for each block the motion vector between the two temporally successive original pictures. That is, the motion vector estimation unit 11 calculates a correlation value between the focused block as a block which is included in one of the two original pictures and whose motion is to be estimated and each of a plurality of candidate regions (candidate blocks) included in a predetermined search range in another one of the two original pictures.

More specifically, the motion vector estimation unit 11 calculates the correlation value by comparing between the blocks pixel values of pixels forming the block. For example, the motion vector estimation unit 11 calculates as the correlation value a sum of absolute difference values between corresponding pixels between the focused block and the candidate region or a sum of square difference values between the corresponding pixels between these blocks. If the correlation value is the sum of absolute difference values or the sum of square difference values, it indicates that a degree of approximation between the blocks becomes larger with an increase in the correlation value.

Moreover, the motion vector estimation unit 11 selects the candidate region most highly correlated with the focused block based on the calculated correlation values, and estimates as the motion vector displacement between the selected candidate region and the focused block.

The motion vector estimation unit 11 estimates the motion vector while changing position of the focused block as described above to thereby estimate the motion vector for each block included in the original picture.

The search range described above does not necessarily have to be a region of one original picture. The search range may be a range corresponding to a desired region extending over one or more original pictures of those temporally former and temporally latter than the original picture including the focused block.

Next, details of the processing of determining the motion compensation strength by the compensation strength determination unit 12 will be described.

First, the processing of calculating the degree of reliability of the motion vector by the compensation strength determination unit 12 (S106 of FIG. 2) will be described.

The compensation strength determination unit 12, in order to calculate a degree of change in the motion vector, calculates an average value of motion vector values of a plurality of blocks located around the focused block. Then the compensation strength determination unit 12 calculates the degree of change by using an absolute difference value between the motion vector value of the focused block and the calculated average value of the motion vector values. This degree of change corresponds to the degree of reliability indicating that the reliability becomes lower with an increase in the value.

The blocks located around the focused block include the blocks adjacent to the focused block and the blocks adjacent to the aforementioned adjacent blocks. That is, the blocks located around the focused block are blocks located near the focused block. For example, the blocks located around the focused block are the eight blocks surrounding the focused block.

The motion vector value has a value of a horizontal component of a picture and a value of a vertical component thereof.

Therefore, the compensation strength determination unit 12 may calculate the degree of change by using an absolute difference value between the horizontal component of the motion vector value of the focused block and the horizontal component of the calculated average motion vector value. Moreover, the compensation strength determination unit 12 may calculate the degree of change by using only an absolute difference value between the vertical component of the motion vector value of the focused block and the vertical component of the calculated average motion vector value. Moreover, the compensation strength determination unit 12 may calculate the degree of change by using a sum of the absolute difference value of the horizontal components and the absolute difference value of the vertical components.

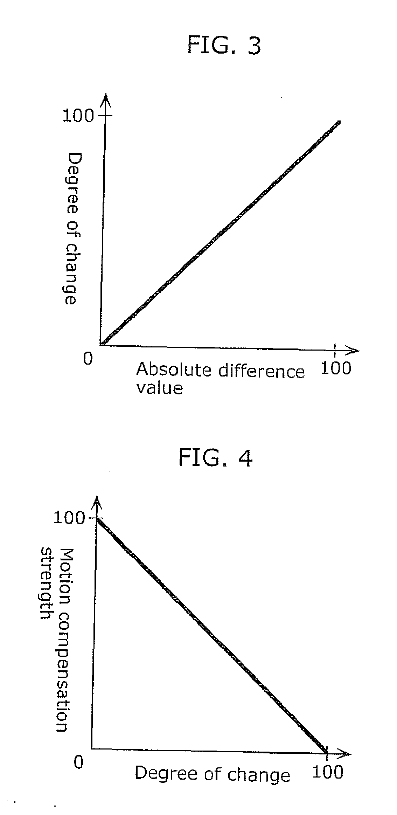

FIG. 3 is a diagram showing one example of relationship between the absolute difference value and the degree of change according to the first embodiment of the invention. FIG. 4 is a diagram showing one example of relationship between the degree of change and the motion compensation strength according to the first embodiment of the invention.

As shown in FIG. 3, the compensation strength determination unit 12 calculates the absolute difference value as the degree of change. Moreover, the compensation strength determination unit 12, as shown in FIG. 4, determines the motion compensation strength in a manner such that the motion compensation strength becomes smaller with an increase in the degree of change. That is, the compensation strength determination unit 12 determines the motion compensation strength in a manner such that the interpolation phase specified by the motion compensation strength approaches closer to the phase of the original picture with a decrease in the reliability of the motion vector.

Next, details of the filtering processing performed by the compensation strength determination unit 12 (S112 of FIG. 2) will be described.

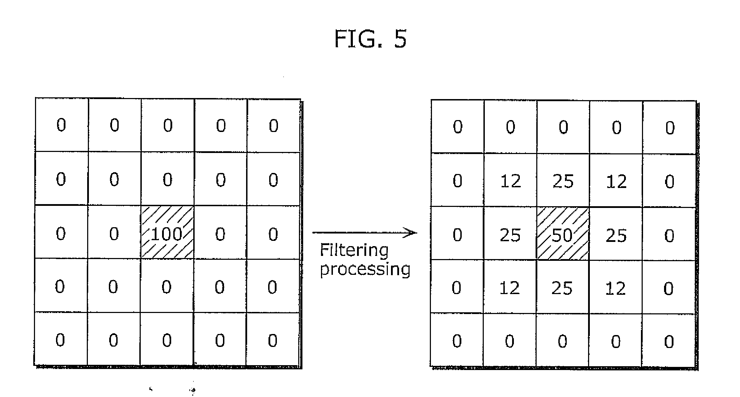

FIG. 5 is a diagram illustrating the filtering processing performed by the image processing apparatus according to the first embodiment of the invention. In FIG. 5, shaded parts indicate the focused block, and numerical values in the blocks indicate motion compensation strength.

As shown in FIG. 5, the compensation strength determination unit 12 performs the filtering processing on the motion compensation strength determined for each block. As a result of this, a difference in the motion compensation strength between the adjacent blocks becomes smaller.

For example, the compensation strength determination unit 12, for each block, may perform the filtering processing by calculating an average value of motion compensation strength of a plurality of blocks included in a predetermined range extending from the block concerned, as the motion compensation strength of the block concerned. Moreover, for example, the compensation strength determination unit 12, for each block, may perform the filtering processing by calculating a weighed summed value of motion compensation strength of the plurality of blocks included in the predetermined range extending from the block concerned.

Next, a reason why the compensation strength determination unit 12 calculates as the degree of reliability the degree of change between the motion vector of the focused block and the blocks located around the focused block will be described below.

In a case where a relatively large region in the picture makes the same motion as is the case where the entire picture moves uniformly, the motion vector of the focused block and the motion vectors of the blocks located around the focused block have similar magnitude and directions with high possibility. Moreover, in a case where the motion vector of the focused block and the motion vectors of the blocks located around the focused block have similar magnitude and directions, it can easily be predicted that the motion vectors are also accurate with high possibility.

Specifically, in a case where the degree of change between the motion vector estimated for the focused block and the motion vectors estimated for the blocks located around the focused block is small, it can be recognized that the motion vector of the focused block has high reliability.

On the contrary, in a case where only a relatively small region in the picture makes a motion as is the case where a person or an object moves, in a border portion of this region in particular, the motion vector estimated for the focused block and the motion vectors estimated for the blocks around the focused block are greatly different from each other with high possibility. Moreover, in a case where the motion vector estimated for the focused block and the motion vectors estimated for the blocks around the focused block have greatly different magnitude and directions from each other, it can easily be predicted that the motion vectors are inaccurate with high possibility.

Specifically, in a case where the degree of change between the motion vector estimated for the focused block and the motion vectors estimated for the blocks located around the focused block is large, it can be recognized that the motion vector of the focused block has low reliability.

As described above, the compensation strength determination unit 12 calculates as the degree of reliability the degree of change between the motion vector estimated for the focused block and the motion vectors estimated for the blocks located around the focused block.

Next, details of the motion compensation processing performed by the interpolated picture generation unit 13 (S114 of FIG. 2) will be described.

The interpolated picture generation unit 13 first calculates an interpolation phase by using the motion compensation strength. At this point in time, the interpolated picture generation unit 13 calculates the interpolation phase in a manner such that a phase difference between the phase of the original picture and the interpolation phase is smaller with a decrease in the motion compensation strength. In particular, the interpolated picture generation unit 13 calculates the interpolation phase in a manner such that a phase difference between the phase of the original picture closer to the proper phase and the interpolation phase is smaller with a decrease in the motion compensation strength.

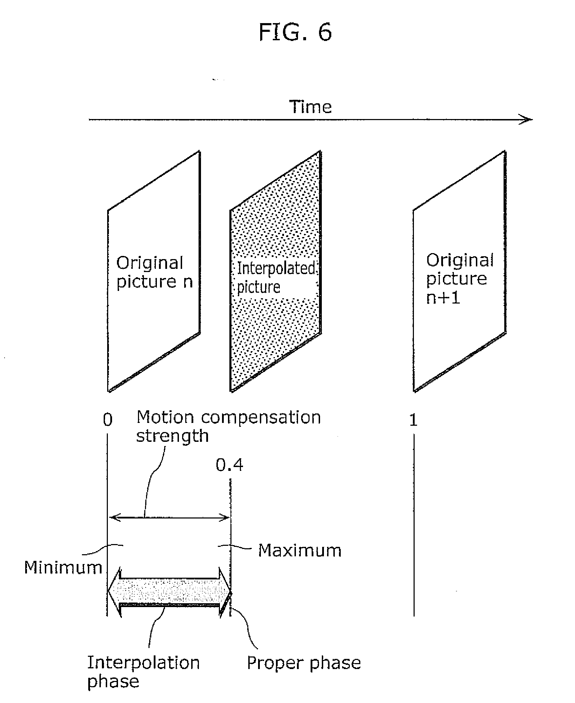

FIG. 6 is a diagram illustrating relationship between the motion compensation strength and the interpolation phase where the proper phase is "0.4". In FIG. 6, phases of the two temporally successive original pictures are "0" and "1".

As shown in FIG. 6, when the motion compensation strength is maximum (for example, "100"), the interpolated picture generation unit 13 calculates "0.4" equal to the proper phase as the interpolation phase. On the other hand, when the motion compensation strength is minimum (for example, "0"), the interpolated picture generation unit 13 calculates "0" equal to the phase of the original picture closer to the proper phase as the interpolation phase.

For example, where the motion compensation strength is indicated by a value from 0 to 100 and the proper phase is less than 0.5, the interpolation phase is calculated as follows:

$$\text{Interpolation phase} = \text{proper phase} * \text{motion compensation strength}/100.$$

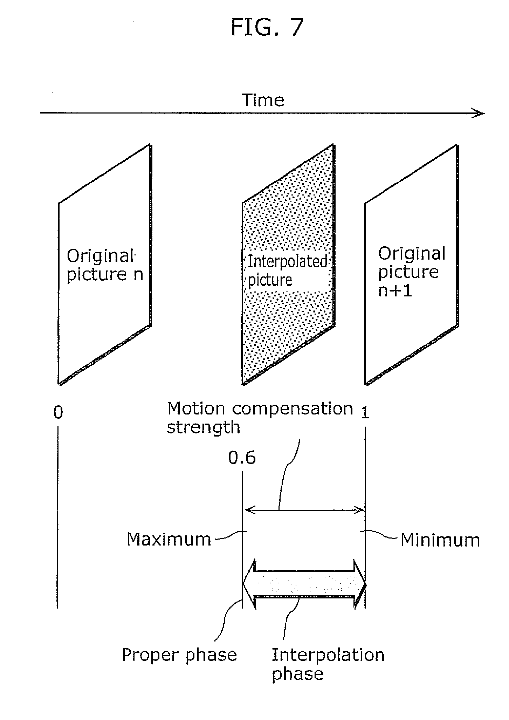

FIG. 7 is a diagram illustrating relationship between the motion compensation strength and the interpolation phase where the proper phase is "0.6". In FIG. 7, phases of the two temporally successive original pictures are "0" and "1".

As shown in FIG. 7, when the motion compensation strength is maximum (for example, "100"), the interpolated picture generation unit 13 calculates "0.6" equal to the proper phase as the interpolated picture. On the other hand, when the motion compensation strength is minimum (for example, "0"), the interpolated picture generation unit 13 calculates "1" equal to the phase of the original picture closer to the proper phase as the interpolation phase.

For example, where the motion compensation strength is indicated by a value from 0 to 100 and the proper phase is 0.5 or above, the interpolation phase is calculated as follows:

$$\text{Interpolation phase} = 1-(1-\text{proper phase}) * \text{motion compensation strength}/100.$$

In this embodiment, the interpolated picture generation unit 13 calculates the interpolation phase, but the compensation strength determination unit 12 may calculate the interpolation phase. In this case, the compensation strength determination unit 12 may output the calculated interpolation phase as the motion compensation strength to the interpolated picture generation unit 13.

By using the interpolation phase and the motion vector calculated as described above, the interpolated picture generation unit 13 performs the motion compensation processing by use of the original picture to thereby generate an interpolated picture.

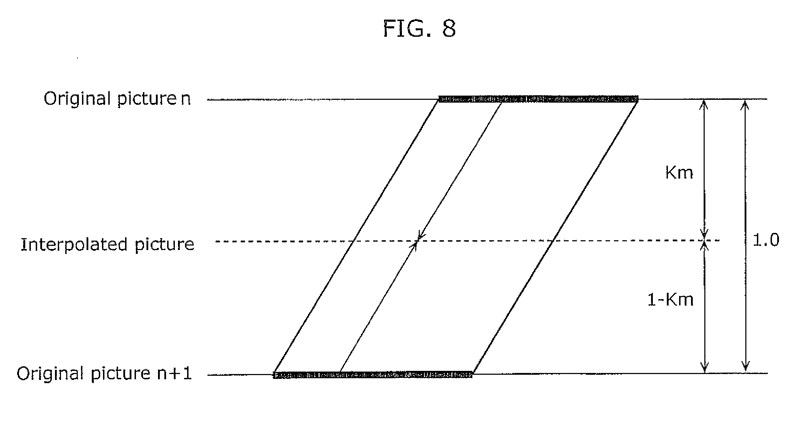

FIG. 8 is a diagram schematically showing the processing of generating the interpolated picture by the image processing apparatus according to the first embodiment of the invention. Specifically, FIG. 8 is a diagram schematically showing the processing of generating the interpolated picture by performing the motion compensation processing by using an original picture (n) or an original picture (n+ 1).

In FIG. 8, a phase difference between the original picture (n) and the original picture (n+1) is "1.0", and the interpolation phase is Km. Here, to perform the motion compensation processing by using the original picture (n), the interpolated picture generation unit 13 performs the motion compensation processing by using a motion vector obtained by multiplying the motion vector by the phase difference Km. On the other hand, to perform the motion compensation processing by using the original picture (n+1), the interpolated picture generation unit 13 performs the motion compensation processing by using a motion vector obtained by multiplying the motion vector by the phase difference -(1-Km). The interpolated picture generation unit 13 generates the interpolated picture by performing the motion compensation processing in this manner.

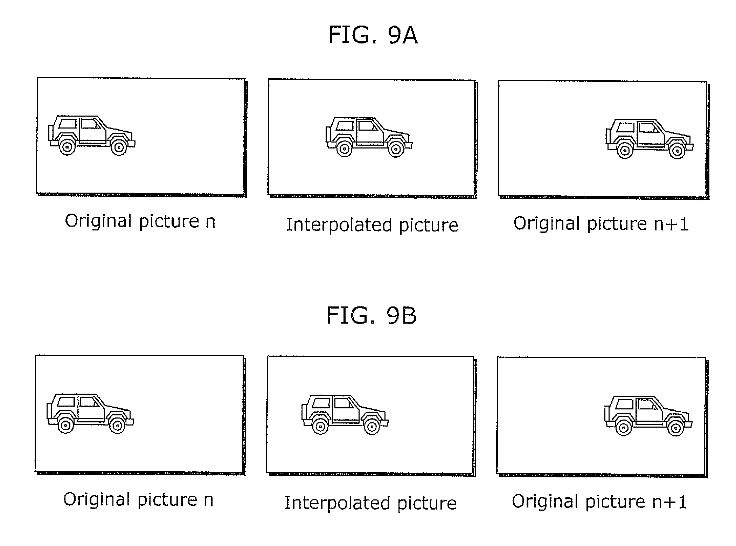

FIGS. 9A and 9B are diagrams illustrating interpolated pictures generated by the image processing apparatus according to the first embodiment of the invention.

In FIG. 9A, the reliability of the motion vector estimated in a picture region of a car is high, and therefore the interpolated picture with a middle phase between the original picture (n) and the original picture (n+1), that is, the proper phase is generated. On the other hand, in FIG. 9B, the reliability of the motion vector estimated in a picture region of a car is low, and therefore the interpolated picture with a phase closer to the phase of the original picture (n) is generated.

Next, a reason why the interpolated picture generation unit 13 generates the interpolated picture in accordance with the interpolation phase that is less different from the phase of the original picture than from the proper phase where the reliability of the motion vector is low will be described.

The proper phase is a phase logically calculated based on the ratio between the frame rate before the conversion and the frame rate after the conversion as described above. For example, in a case where an inputted moving picture of 60 Hz is subjected to frame conversion into an outputted moving picture of 120 Hz, the proper phase is any of values "0.0", "0.5", "1.0"... obtained every time "0.5" as a ratio between the frame rate "60" of the inputted moving image and the frame rate "120" of the outputted moving picture is multiplied.

Moreover, for example, when an inputted moving image of 24Hz is subjected to frame rate conversion into an outputted moving picture of 60 Hz, the proper phase is any of values "0.0", "0.4", "0.8", "1.2", "1.6", "2.0"... obtained every time "0.4" as a ratio between the frame rate "24" of the inputted moving image and the frame rate 60" of the outputted moving picture is multiplied.

The phase of the original picture included in the inputted moving picture is indicated by an integer value; therefore, a picture with the proper phase indicated by the integer value does not have to be generated as the interpolated picture. That is, when the inputted moving picture of 60 Hz is subjected to the frame rate conversion into the outputted moving picture of 120 Hz, as a result of interpolating an interpolated picture with the phase "0.5" between the successive original pictures, outputted moving pictures continue at equal intervals in chronological order, resulting in moving pictures with a smooth motion. On the other hand, when the inputted moving picture of 24 Hz is subjected to the frame rate conversion into the outputted moving image of 60 Hz, as a result of respectively interpolating interpolated pictures with the phases "0.4", "0.8", "1.2", and "1.6" between their corresponding two successive original pictures, outputted moving pictures continue at equal intervals in chronological order, resulting in moving pictures with a smooth motion.

However, when the motion vector estimated by the motion vector estimation unit 11 is different from an actual picture motion, the interpolated picture generated by using this motion vector fails. That is, when the motion vector has low reliability, the interpolated picture generated by using this motion vector is a greatly deteriorated picture with high possibility.

Thus, the image processing apparatus 10 generates the interpolated picture by using an interpolation phase obtained by correcting the proper phase in accordance with the reliability of the motion vector. That is, the interpolated picture is generated by using an interpolation phase closer to the proper phase with an increase in the reliability of the motion vector. This is because with high reliability of the motion vector, the motion vector indicates a more accurate picture motion with high possibility, and thus even an interpolated picture whose phase is closer to the proper phase deteriorates with low possibility. Moreover, inserting the interpolated picture with a phase close to the proper phase results in a smooth picture motion in the outputted moving picture.

On the contrary, when the motion vector has low reliability, the interpolated picture is generated by using the interpolation phase closer to the phase of the original picture than to the proper phase. This is because with a decrease in a difference between the interpolation phase and the phase of the original picture, the interpolated picture becomes closer to the original picture, which can therefore suppress picture deterioration.

As described above, the image processing apparatus 10 according to this embodiment can bring the interpolation phase closer to the phase of the original picture with a decrease in the reliability of the motion vector, which can therefore suppress the picture deterioration. On the other hand, when the motion vector has high reliability, the image processing apparatus 10 can bring the interpolation phase closer to the proper phase, which can therefore smoothen the picture motion. Moreover, the image processing apparatus 10 can determine the motion compensation strength for specifying the interpolation phase in accordance with the reliability of the motion vector, and can therefore adaptively generate the interpolated picture for the inputted moving picture. Moreover, the image processing apparatus 10 can bring the interpolation phase closer to the phase of the original picture closer to the proper phase with a decrease in the reliability of the motion vector, which can further suppress the picture deterioration.

Moreover, the image processing apparatus 10 can calculate as the degree of reliability the degree of change between the motion vector of the focused block and the motion vectors of the blocks located around the focused block, and can calculate the reliability of the motion vector with high accuracy. Then the image processing apparatus 10 can determine the motion compensation strength in accordance with the reliability calculated with high accuracy in this manner to thereby generate the interpolated picture with suppressed picture deterioration and with a smooth motion.

Moreover, the image processing apparatus 10 can generate the interpolated picture by changing the interpolation phase for each block, and therefore can adaptively generate the interpolated picture with suppressed picture deterioration and with a smooth motion.

Moreover, the image processing apparatus 10 can perform the spatial filtering processing on the motion compensation strength to thereby suppress a sudden change in the motion compensation strength between the focused block and the blocks located around the focused block, and determine continuous motion compensation strength.

In this embodiment, the compensation strength determination unit 1 2 calculates the calculated absolute difference value itself as the degree of change, but does not necessarily have to calculate the absolute difference value itself as the degree of change.

For example, the compensation strength determination unit 12 may calculate as the degree of change a value obtained by adding a predefined additional value. As a result of this, the compensation strength determination unit 12 can increase or decrease the degree of change independently from the calculated absolute difference value.

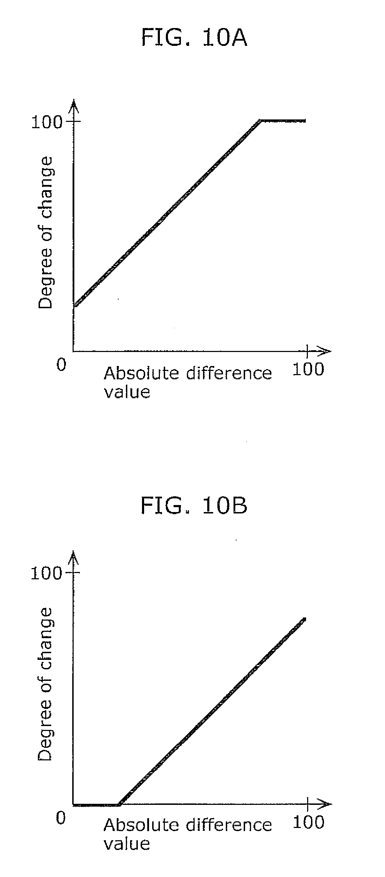

FIGS. 10A and 10B are diagrams showing one example of relationship between the absolute difference value and the degree of change according to the first embodiment of the invention. More specifically, FIG. 10A is a graph showing the relationship between the absolute difference value and the degree of change when a positive value is added as the additional value to the absolute difference value. FIG. 10B is a graph showing relationship between the absolute difference value and the degree of change when a negative value is added as the additional value to the absolute difference value.

As shown in FIG. 10A, when the positive additional value is added to the absolute difference value, the degree of change increases without exception. Therefore, the motion compensation strength decreases and an interpolated picture with a phase closer to the phase of the original picture is generated. That is, the image processing apparatus 10 can generate the interpolated picture with suppressed picture deterioration.

On the other hand, as shown in FIG. 10B, when the negative additional value is added to the absolute difference value, the degree of change decreases without exception. Therefore, the motion compensation strength increases and an interpolated picture with a phase closer to the proper phase is generated. That is, the image processing apparatus 10 can generate the interpolated picture with a smooth motion.

Moreover, for example, the compensation strength determination unit 12 may calculate as the degree of change a value obtained by multiplying the calculated absolute difference value by a predefined value. Consequently, the compensation strength determination unit 12 can increase or decrease the degree of change in subordination to the calculated absolute difference value. That is, the compensation strength determination unit 12 can adjust a ratio of a change in the degree of change with respect to the absolute difference value.

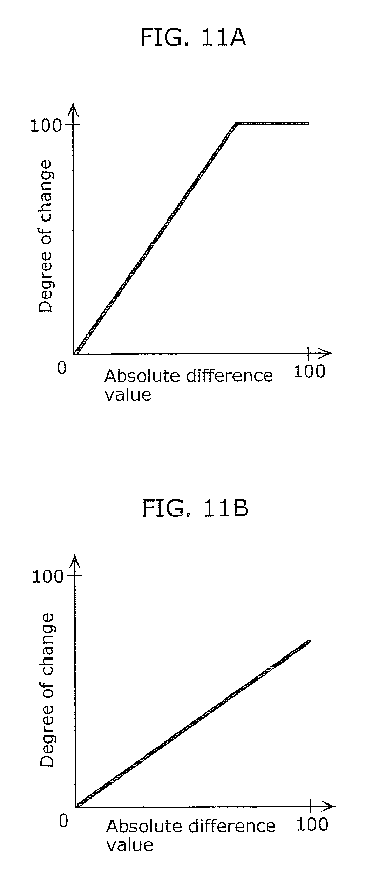

FIGS. 11A and 11B are diagrams showing one example of the relationship between the absolute difference value and the degree of change according to the first embodiment of the invention. Specifically, FIG. 11A is a graph showing the relationship between the absolute difference value and the degree of change in a case where a value equal to one or above is multiplied to the absolute difference value. FIG. 11B is a graph showing the relationship between the absolute difference value and the degree of change in a case where a value less than one is multiplied to the absolute difference value.

As shown in FIG. 11A, when the value equal to one or above is multiplied to the absolute difference value, the ratio of the change in the degree of change with respect to the absolute difference value increases. Therefore, the image processing apparatus 10 can generate an interpolated picture with a small difference from the original picture and suppressed picture deterioration.

On the other hand, as shown in FIG. 11B, when the value less than one is multiplied to the absolute difference value, the ratio of the change in the degree of change with respect to the absolute difference value decreases. Therefore, the image processing apparatus 10 can generate an interpolated picture with a smooth motion.

Moreover, in this embodiment, the compensation strength determination unit 12 calculates the difference between the motion vector value of the focused block and the average value of the motion vector values of the plurality of blocks located around the focused block, but does not necessarily have to calculate the difference in this manner. For example, the compensation strength determination unit 12 may calculate a difference between the motion vector value of the focused block and the motion vector value of one of the blocks located around the focused block.

Moreover, in this embodiment, the compensation strength determination unit 12 adds together all the motion vector values estimated for the plurality of blocks located around the focused block and divides an obtained value by the number of blocks targeted for the aforementioned addition to thereby calculate the average value, but does not necessarily have to calculate the average value in this manner.

For example, the compensation strength determination unit 12 may perform the filtering processing on the motion vector values estimated for the focused block and the plurality of blocks located around the focused block and may calculate as the average value a numerical value of a low-frequency component in a block group targeted for the filtering processing.

Further, the compensation strength determination unit 12 may perform the filtering processing on the motion vector values estimated for the focused block and the plurality of blocks located around the focused block and may calculate as the degree of change a numerical value of a high-frequency component in the block group targeted for the filtering processing.

It is preferable that the image processing apparatus 10 of this embodiment include a memory for the purpose of holding the motion vector values estimated for the blocks located around the focused block. For example, the compensation strength determination unit 12 may include a memory for holding the motion vector estimated for each block by the motion vector estimation unit 11.

Moreover, for example, the compensation strength determination unit 12 may, as needed, obtain from the motion vector estimation unit 11 the motion vector values estimated for the blocks located around the focused block. In this case, the motion vector estimation unit 11 may include a memory for holding the estimated motion vectors.

(Second Embodiment)

Next, the second embodiment of the invention will be described with reference to the drawings.

An image forming apparatus 20 according to this embodiment differs from the image processing apparatus 10 according to the first embodiment in the processing related to the reliability calculation but is equal to the image processing apparatus 10 in other processing. The points similar to the image processing apparatus 10 will be omitted from illustration and the description.

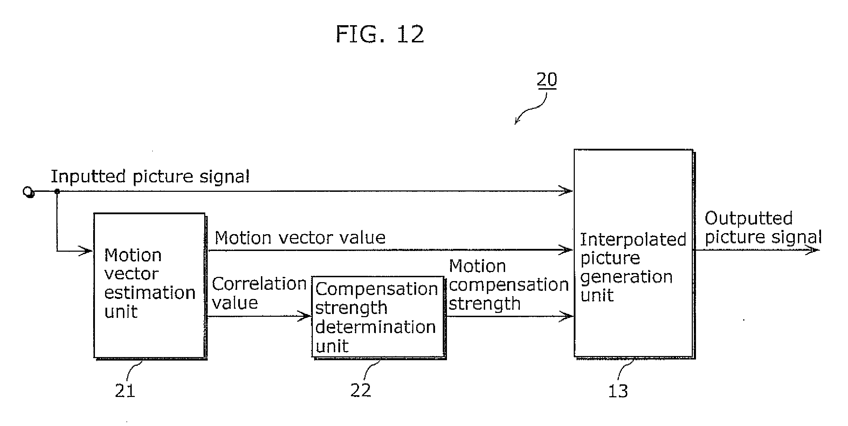

FIG. 12 is a block diagram showing functional configuration of the image processing apparatus according to the second embodiment of the invention. In FIG. 12, components performing the same processing as the components shown in FIG. 1 will be provided with the same numerals and will be omitted from the description.

As shown in FIG. 12, the image processing apparatus 20 includes: a motion vector estimation unit 21, a compensation strength determination unit 22, and an interpolated picture generation unit 13.

The motion vector estimation unit 21 differs from the motion vector estimation unit 11 according to the first embodiment, and outputs to the compensation strength determination unit 22 a correlation value corresponding to a motion vector. This correlation value is a correlation value of a candidate region which is in a plurality of candidate regions included in a predetermined range and which is most highly correlated to the focused block. That is, this correlation value is a correlation value between the block corresponding to a start point of the motion vector and the block corresponding to an end point of the motion vector.

Other processing performed by the motion vector estimation unit 21 is the same as that performed by the motion vector estimation unit 11 according to the first embodiment, and thus will be omitted from the description.

The compensation strength determination unit 22 calculates a degree of non-approximation between the block corresponding to the start point of the motion vector included in one of the two original pictures and the block corresponding to the end point of the motion vector included in another one of the original pictures.

The correlation value outputted from the motion vector estimation unit 21 indicates certainty for the motion vector value estimated for the block concerned. A larger correlation value indicates a higher degree of non-approximation between the focused block and the candidate block. Then a higher degree of non-approximation indicates lower reliability of the estimated motion vector value.

Therefore, the compensation strength determination unit 22 calculates the degree of non-approximation to the candidate region in accordance with the correlation value corresponding to the motion vector value estimated for the focused block. Specifically, the compensation strength determination unit 22 calculates as the degree of non-approximation the correlation value itself outputted from the motion vector estimation unit 21. This degree of non-approximation corresponds to a degree of reliability indicating that the reliability becomes lower with an increase in the value.

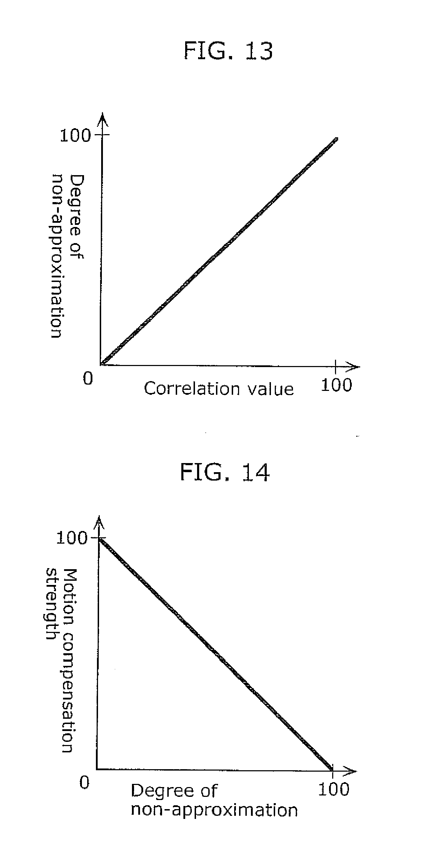

FIG. 13 is a diagram showing one example of relationship between the correlation value and the degree of non-approximation according to the second embodiment of the invention. FIG. 14 is a diagram showing one example of relationship between the degree of non-approximation and motion compensation strength according to the second embodiment of the invention.

As shown in FIG. 13, the compensation strength determination unit 22 calculates the correlation value as the degree of non-approximation. Moreover, the compensation strength determination unit 22 determines the motion compensation strength in a manner such that the motion compensation strength decreases with an increase in the degree of non-approximation, as shown in FIG. 14. Specifically, the compensation strength determination unit 22 determines the motion compensation strength in a manner such that the interpolation phase specified for the motion compensation strength approaches closer to the phase of the original picture with a decrease in the reliability of the motion vector.

Moreover, the compensation strength determination unit 22, as is the case with the compensation strength determination unit 12 according to the first embodiment, performs filtering processing on the motion compensation strength determined for each block, as shown in FIG. 5.

Note that the compensation strength determination unit 22 does not necessarily have to calculate the correlation value itself as the degree of non-approximation. For example, the compensation strength determination unit 22 may calculate as the degree of non-approximation a value obtained by adding a predefined additional value to the correlation value. Consequently, the compensation strength determination unit 22 can increase or decrease the degree of non-approximation independently from the correlation value.

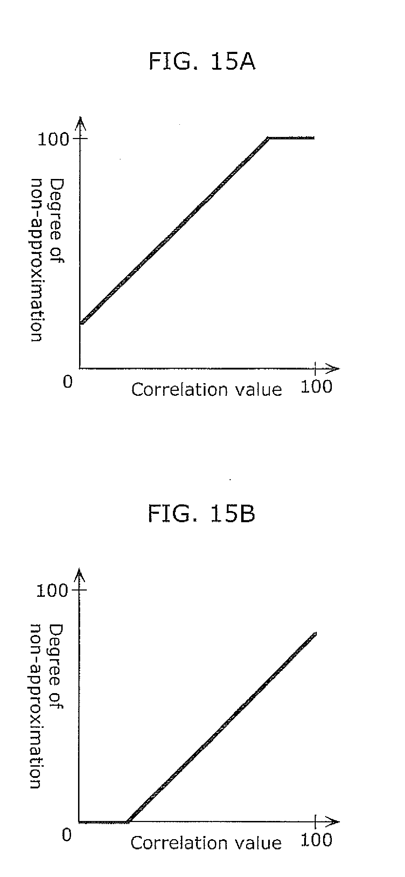

FIGS. 15A and 15B are diagrams showing one example of the relationship between the correlation value and the degree of non-approximation according to the second embodiment of the invention. Specifically, FIG. 15A is a graph showing the relationship between the correlation value and the degree of non-approximation in a case where a positive value is added as an additional value to the correlation value. FIG. 15B is a graph showing the relationship between the correlation value and the degree of non-approximation in a case where a negative value is added as an additional value to the correlation value.

As shown in FIG. 15A, when the positive additional value is added to the correlation value, the degree of non-approximation increases without exception. Therefore, the motion compensation strength decreases and an interpolated picture with a phase closer to the phase of the original picture is generated. That is, the image processing apparatus 20 can generate the interpolated picture with suppressed picture deterioration.

On the other hand, as shown in FIG. 15B, when the negative additional value is added to the correlation value, the degree of non-approximation decreases without exception. Therefore, the motion compensation strength increases and an interpolated picture with a phase closer to the proper phase is generated. That is, the image processing apparatus 20 can generate the interpolated picture with a smooth motion.

(Third Embodiment)

Next, the third embodiment of the invention will be described with reference to the drawings.

An image forming apparatus 30 according to this embodiment differs from the image processing apparatus 10 according to the first embodiment and the image processing apparatus according to the second embodiment in the processing related to the reliability calculation but is equal to them in other processing. Points similar to the image processing apparatus 10 or 20 according to the first or second embodiment will be omitted from illustration and the description.

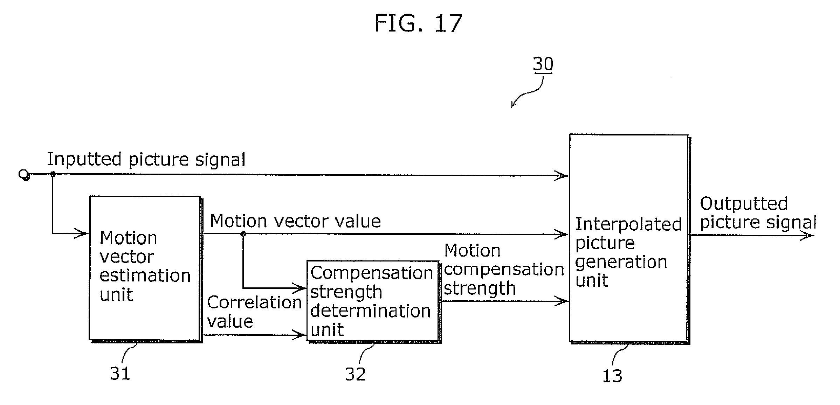

FIG. 17 is a block diagram showing functional configuration of the image processing apparatus according to the third embodiment of the invention. In FIG. 17, components performing the same processing as the components shown in FIG. 1 will be provided with the same numerals and thus will be omitted from the description.

As shown in FIG. 17, the image processing apparatus 30 includes: a motion vector estimation unit 31, a compensation strength determination unit 32, and an interpolated picture generation unit 13.

The motion vector estimation unit 31 outputs to the compensation strength determination unit 32 a motion vector value and also a correlation value corresponding to the motion vector. Other processing performed by the motion vector estimation unit 31 is the same as that performed by the motion vector estimation unit 11 according to the first embodiment and thus will be omitted from the description.

The compensation strength determination unit 32, as is the case with the compensation strength determination unit 12 according to the first embodiment, calculates a degree of change by using the motion vector value. Further, the compensation strength determination unit 32, as is the case with the compensation strength determination unit 22 according to the second embodiment, calculates a degree of non-approximation by using the correlation value. Then the compensation strength determination unit 32 calculates reliability by adding together the calculated degree of change and degree of non-approximation. This reliability indicates that the reliability becomes lower with an increase in the value.

The degree of change is a value calculated by using deterioration in the reliability of the motion vector when there are different picture motions between the blocks. On the other hand, the degree of non-approximation is a value calculated by using the deterioration in the reliability of the motion vector when there are different picture motions between the blocks.

Therefore, the compensation strength determination unit 32 can calculate as the reliability in the focused block a result of adding together the calculated degree of change and degree of non-approximation, thereby calculating with high accuracy the degree of reliability reflecting mutually different reasons of the motion vector deterioration. Then by determining motion compensation strength in accordance with the reliability calculated with high accuracy in this manner, the image processing apparatus 30 can generate an interpolated picture with suppressed picture deterioration and with a smooth motion.

As described above, the image processing apparatus 30 according to this embodiment can calculate the reliability by using the degree of change and the degree of non-approximation with high accuracy. Then by determining the motion compensation strength in accordance with the reliability calculated with high accuracy in this manner, the image processing apparatus 30 can generate the interpolated picture with the suppressed picture deterioration and with the smooth motion.

(Fourth Embodiment)

Next, the fourth embodiment of the invention will be described with reference to the drawings.

An image processing apparatus 40 according to this embodiment differs from the image processing apparatus 10 according to the first embodiment in the processing related to the motion compensation strength determination but is equal to the image processing apparatus 10 in other processing. Focusing on points different from the image processing apparatus 10 according to the first embodiment, a description will be given below.

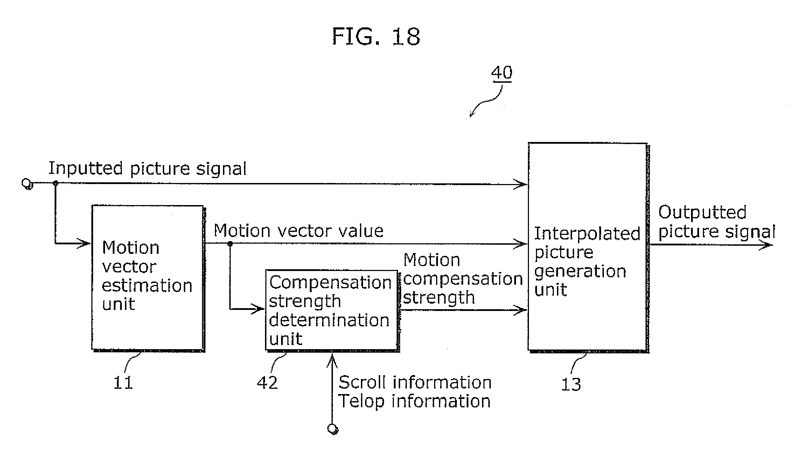

FIG. 18 is a block diagram showing functional configuration of the image processing apparatus according to the fourth embodiment of the invention. In FIG. 18, components performing the same processing as the components shown in FIG. 1 will be provided with the same numerals and thus will be omitted from the description.

As shown in FIG. 18, the image processing apparatus 40 includes a motion vector estimation unit 11, a compensation strength determination unit 42, and an interpolated picture generation unit 13.

The compensation strength determination unit 42, in addition to performing the processing performed by the compensation strength determination unit 12 according to the first embodiment, obtains scroll information as information related to scrolling and telop information related to a telop.

The scroll information is information indicating possibility that a picture is scrolling in a partial or entire region of the original picture (hereinafter simply called "scroll possibility"). Moreover, the telop information is information indicating possibility that a telop is displayed in a moving manner in the partial or entire region of the original picture (hereinafter simply called "telop possibility").

Further, the compensation strength determination unit 42 determines again the determined motion compensation strength in accordance with the obtained scroll information and telop information. Specifically, the compensation strength determination unit 42 determines again the motion compensation strength in a manner such that the interpolation phase approaches closer to the proper phase than to the interpolation phase specified by the determined motion compensation strength with an increase in the scroll possibility. Moreover, the compensation strength determination unit 42 determines again the motion compensation strength in a manner such that the interpolation phase approaches closer to the proper phase than to the interpolation phase specified by the determined motion compensation strength with an increase in the telop possibility.

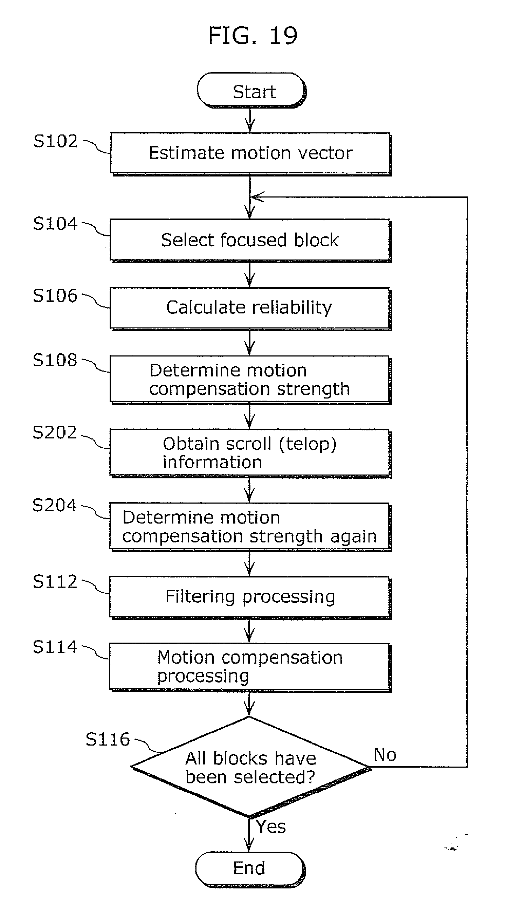

FIG. 19 is a flow chart showing a flow of the processing performed by the image processing apparatus according to the fourth embodiment of the invention. In FIG. 19, the same processing as that of FIG. 2 is provided with the same numerals and thus will be omitted from the description.

After the motion compensation strength is determined, the compensation strength determination unit 42 obtains the scroll information and the telop information (S202). Subsequently, the compensation strength determination unit 42 determines again the motion compensation strength in accordance with the scroll information and the telop information of a region including the focused block (S204).

Then performing the same processing as that described in FIG. 2 (S112 to S116), the image processing apparatus 40 ends the processing of generating an interpolated picture.

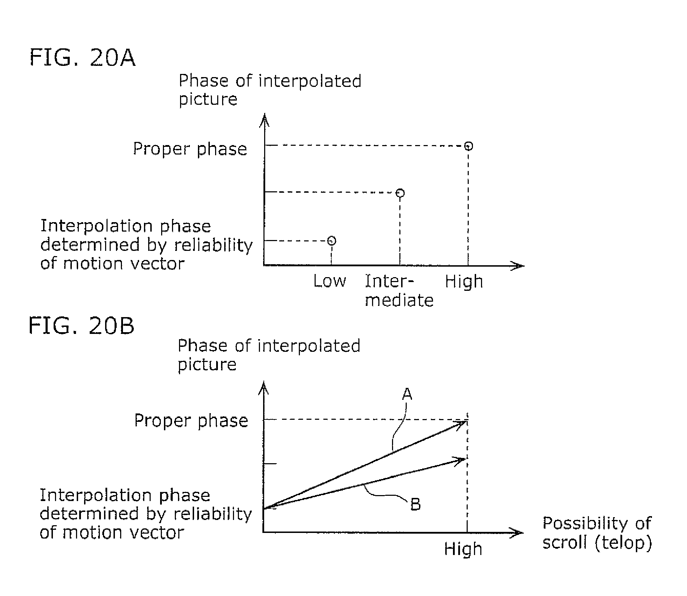

FIGS. 20A and 20B are diagrams illustrating the processing of determining again the motion compensation strength by the compensation strength determination unit according to the fourth embodiment of the invention.

FIG. 20A is a diagram illustrating the processing of determining again the motion compensation strength by the compensation strength determination unit 42 in a case where the scroll possibility or the telop possibility is indicated by three steps including "High", "Intermediate", and "Low". As shown in FIG. 20A, in the case of "Low" indicating that the scroll possibility or the telop possibility is low, the compensation strength determination unit 42 determines again the motion compensation strength determined by using the reliability of the motion vector directly as the motion compensation strength. Moreover, in the case of "High" indicating that the scroll possibility or the telop possibility is high, the compensation strength determination unit 42 determines again the motion compensation strength specifying the proper phase as the interpolation phase.

Moreover, when the scroll possibility or the telop possibility is "Intermediate" between "High" and "Low", the compensation strength determination unit 42 determines again the motion compensation strength specifying as the interpolation phase an intermediate phase between the interpolation phase determined by using the reliability of the motion vector and the proper phase.

The scroll possibility or the telop possibility is not limited to the three steps including "High", "Intermediate", and "Low", but may be multi-stepped including four or more steps or two steps including "" and "Low".

FIG. 20B is a diagram illustrating the processing of determining again the motion compensation strength by the compensation strength determination unit 42 in a case where the scroll possibility or the telop possibility is indicated by multiple steps.

As shown in a graph A of FIG. 20B, the compensation strength determination unit 42 determines again the motion compensation strength in a manner such that the interpolation phase approaches closer to the proper phase than to the interpolation phase specified by the determined motion compensation strength with an increase in the scroll possibility or the telop possibility.

Moreover, as shown in a graph B of FIG. 20B, even when the scroll possibility or the telop possibility is highest, the compensation strength determination unit 42 may determine again the motion compensation strength in a manner such that the interpolation phase does not match the proper phase.

As described above, the image processing apparatus 40 can determine again the motion compensation strength in a manner such that the interpolation phase of the region where the picture is scrolling or the region where a telop is displayed in a moving manner approaches closer to the proper phase than to the interpolation phase determined in accordance with the reliability of the motion vector. Therefore, the image processing apparatus 40 can make the scrolling picture or the telop motion smooth or natural in the moving picture after the conversion.

The compensation strength determination unit 42 may obtain either one of the scroll information and the telop information. In this case, the compensation strength determination unit 42 determines again the motion compensation strength in accordance with only one obtained piece of information included in the scroll information and the telop information.

The image processing apparatuses according to one aspect of the invention have been described above based on the embodiments, but the invention is not limited to these embodiments. Without departing from the spirits of the invention, various modifications added to the embodiments by those skilled in the art or a mode formed by combining together the components in the different embodiments are also included in the range of the invention.

That is, the embodiments disclosed herein should be thought to be illustrative and not limiting in any point. The range of the invention is indicated not by the above description but by the scope of the claims, and it is intended that all modifications in a sense and a range equal to those of the scope of the claims are included.

For example, in the embodiments described above, the motion compensation strength is determined for each block, but the motion com pensation strength does not necessarily have to be determ ined for each block. For example, the motion compensation strength may be determ ined for each predetermined region com posed of a plurality of blocks. In this case, the compensation strength determination unit may determine the motion compensation strength of the representative block as the motion compensation strength of this region.

Moreover, in this embodiment described above, the phase of the original picture to which the interpolation phase approaches closer when the reliability of the motion vector is low is the phase of the original picture closer to the proper phase, but may be always the phase of the original picture temporally former than the interpolated picture or the phase of the original picture temporally later than the interpolated picture.

The interpolated picture generation unit, in accordance with the phase difference between the proper phase and the phase of the original picture targeted for the approach, may calculate the interpolation phase in a manner such that the interpolation phase approaches closer to the phase of the original picture with an increase in the phase difference.

Moreover, in the embodiment described above, the compensation strength determination unit performs the spatial filtering processing on the motion compensation strength for each block, but does not necessarily have to perform the filtering processing. Even when the compensation strength determination unit does not perform the filtering processing, the image processing apparatus can bring the interpolation phase closer to the phase of the original picture with a decrease in the reliability of the motion vector, and thus can generate an interpolated picture with suppressed picture deterioration and with a smooth motion.

The invention may be realized not only as such an image processing apparatus but also as an image processing method having characteristic processing steps included in the image processing apparatus. Moreover, the invention may also be realized as a program causing a computer including a CPU (Central Processing Unit), a memory, etc. to execute each of the steps included in such an image processing apparatus. Then it is needless to say that such a program can be circulated through a recording medium such as a CD-ROM and a transfer medium such as the Internet.

Further, the invention can be realized as a semiconductor integrated circuit (LSI) realizing part or all of functions of such an image processing apparatus, or can be realized as an image display device such as a digital TV including such an image processing apparatus. Specifically, it can be realized as an integrated circuit including all the components shown in FIG. 1 , 12, 17, or 18.

Moreover, circuit integration may be achieved by an individual one chip or in one chip including part or all of the components.

Moreover, the circuit integration is not limited to the LSI, but may also be realized as a special circuit or a general-purpose processor.

Further, as a result of introduction of a technology of circuit integration in place of the LSI by another derived technology or an advancement in semiconductor technology, it is needless to say that various processing units may be put into integration by using this technology.

## INDUSTRIAL APPLICABILITY

The invention is applicable as an image processing apparatus capable of generating an interpolated picture with suppressed picture deterioration and with a smooth motion and an image display apparatus including the image processing apparatus.

[Reference Signs List]

| | |
|---|---|
| 10, 20, 30, 40 | Image processing apparatus |
| 11, 21, 31 | Motion vector detection unit |
| 12, 22, 32, 42 | Compensation strength determination unit |
| 13 | Interpolated picture generation unit |

## Claims

**1.** An image processing apparatus for generating an interpolated picture interpolated between two temporally successive original pictures included in an inputted moving picture, said image processing apparatus comprising:

a motion vector estimation unit configured to estimate for each block a motion vector between the two temporally successive original pictures;

a compensation strength determination unit configured to calculate a degree of reliability of the motion vector estimated by said motion vector determination unit, and determine, in accordance with the calculated degree of reliability, motion compensation strength for specifying an interpolation phase as a phase of the interpolated picture to be generated; and

an interpolated picture generation unit configured to generate the interpolated picture by performing motion compensation processing on at least one of the two original pictures, using the interpolation phase specified according to the motion compensation strength determined by said compensation strength determination unit and the motion vector estimated by said motion vector estimation unit,

wherein said compensation strength determination unit is configured to determine the motion compensation strength in a manner such that the interpolation phase approaches closer to one of phases of the two original pictures with a decrease in the calculated degree of reliability.

2. The image processing apparatus according to Claim 1, wherein said compensation strength determination unit is configured to calculate, as the degree of reliability, a degree of change between the motion vector estimated for the focused block included in either one of the two original pictures and the motion vector estimated for at least one of the blocks located around the focused block.

3. The image processing apparatus according to Claim 1, wherein said compensation strength determination unit is configured to calculate, as the degree of reliability, a degree of non-approximation between the block, corresponding to a start point of the motion vector, included in either one of the two original pictures and the block, corresponding to an end point of the motion vector, included in the other one of the two original pictures.

4. The image processing apparatus according to Claim 1, wherein said compensation strength determination unit is configured to calculate, as the degree of reliability, a sum of (i) a degree of change between the motion vector estimated for the focused block included in either one of the two original pictures and the motion vector estimated for at least one of the blocks located around the focused block and (ii) a degree of non-approximation between the block corresponding to the start point of the motion vector included in one of the two original pictures and the block corresponding to the end point of the motion vector included in another one of the two original pictures.

5. The image processing apparatus according to any one of Claims 1 to 4,
wherein said compensation strength determination unit is configured to determine the motion compensation strength for each block, and
said interpolated picture generation unit is configured to generate the interpolated picture by performing motion compensation processing for each block by using the determined motion compensation strength.

6. The image processing apparatus according to Claim 5,
wherein said compensation strength determination unit is configured to determine the motion compensation strength by performing spatial filtering processing upon determining the motion compensation strength in a manner such that a difference in the motion compensation strength between the adjacent blocks becomes smaller.

7. The image processing apparatus according to any one of Claims 1 to 6,
wherein said compensation strength determination unit is configured to determine the motion compensation strength in a manner such that the interpolation phase approaches closer to the phase of one of the two original pictures closer to the proper phase with a decrease in the calculated degree of reliability, and
the proper phase is a phase logically calculated based on a frame rate before conversion and a frame rate after the conversion.

8. The image processing apparatus according to any one of Claims 1 to 7,
wherein said compensation strength determination unit is configured to further obtain scroll information indicating possibility that the picture is scrolling in a partial or entire region of the two original pictures, and determine again the motion compensation strength in a manner such that the interpolation phase approaches closer to the proper phase than to the interpolation phase specified by the determined motion compensation strength with an increase in the possibility indicated by the obtained scroll information.

9. The image processing apparatus according to any one of Claims 1 to 8,
wherein said compensation strength determination unit is configured to further obtain telop information indicating possibility that a telop is displayed in a moving manner in a partial or entire region of the two original pictures, and determine again the motion compensation strength in a manner such that the interpolation phase approaches closer to the proper phase than to the interpolation phase specified by the determined motion compensation strength with an increase in the possibility indicated by the obtained telop information.

10. An integrated circuit generating an interpolated picture interpolated between two temporally successive original pictures included in an inputted moving picture, the integrated circuit comprising:

a motion vector estimation unit configured to estimate for each block a motion vector between the two temporally successive original pictures;
a compensation strength determination unit configured to calculate a degree of reliability of the motion vector estimated by said motion vector determination unit, and determine, in accordance with the calculated degree of reliability, motion compensation strength for specifying an interpolation phase as a phase of the interpolated picture to be generated; and
an interpolated picture generation unit configured to generate the interpolated picture by performing motion compensation processing on at least one of the two original pictures, using the interpolation phase specified according to the motion compensation strength determined by said compensation strength determination unit and the motion vector estimated by said motion vector estimation unit,
wherein said compensation strength determination unit is configured to determine the motion compensation strength in a manner such that the interpolation phase approaches closer to one of phases of the two original pictures with a decrease in the calculated degree of reliability.

11. An image processing method of generating an interpolated picture interpolated between two temporally successive original pictures included in an inputted moving picture, the image processing method comprising:

estimating for each block a motion vector between the two temporally successive original pictures;
calculating a degree of reliability indicating reliability of the motion vector estimated in said estimating and determining, in accordance with the calculated degree of reliability, motion compensation strength for specifying an interpolation phase as a phase of the interpolated picture to be generated; and
generating the interpolated picture by performing motion compensation processing on at least one of the two original pictures, using the interpolation phase specified according to the motion compensation strength determined in said determining and the motion vector estimated in said estimating,
wherein in said determining, the motion compensation strength is determined in a manner such that the interpolation phase approaches closer to one of phases of the two original pictures with a decrease in the reliability indicated by the calculated degree of reliability.

12. A non-transitory computer-readable recording medium having a program recorded therein, for casing a computer to execute the image processing method according to Claim 11.

FIG. 1

Inputted picture signal

Motion vector estimation unit
11

Motion vector value

Compensation strength determination unit
12

Motion compensation strength

Interpolated picture generation unit
13

Outputted picture signal

10

# FIG. 2

```
              ┌──────────────┐
              │    Start     │
              └──────┬───────┘
                     │
                     ▼
S102  ┌───────────────────────────┐
      │   Estimate motion vector  │
      └─────────────┬─────────────┘
                    │            ◄───────────────┐
                    ▼                            │
S104  ┌───────────────────────────┐              │
      │    Select focused block   │              │
      └─────────────┬─────────────┘              │
                    ▼                            │
S106  ┌───────────────────────────┐              │
      │    Calculate reliability  │              │
      └─────────────┬─────────────┘              │
                    ▼                            │
S108  ┌───────────────────────────┐              │
      │   Determine motion        │              │
      │   compensation strength   │              │
      └─────────────┬─────────────┘              │
                    ▼                            │
S112  ┌───────────────────────────┐              │
      │    Filtering processing   │              │
      └─────────────┬─────────────┘              │
                    ▼                            │
S114  ┌───────────────────────────┐              │
      │   Motion compensation     │              │
      │   processing              │              │
      └─────────────┬─────────────┘              │
                    ▼                            │
S116          ╱───────────────╲     No           │
             ╱   All blocks     ╲─────────────────┘
             ╲  have been selected? ╱
              ╲───────────────╱
                    │ Yes
                    ▼
              ┌──────────────┐
              │     End      │
              └──────────────┘
```

# FIG. 3

# FIG. 4

FIG. 5

# FIG. 6

Time

Original picture n

Interpolated picture

Original picture n+1

0

Motion compensation strength

0.4

Minimum

Maximum

Interpolation phase

Proper phase

1

# FIG. 7

Time

Original picture n

Interpolated picture

Original picture n+1

0

Motion compensation strength

0.6

1

Maximum

Minimum

Proper phase

Interpolation phase

FIG. 8

Original picture n

Interpolated picture

Original picture n+1

Km

1-Km

1.0

EP 2 509 307 A1

FIG. 9A

Original picture n — Interpolated picture — Original picture n+1

FIG. 9B

Original picture n — Interpolated picture — Original picture n+1

FIG. 10A

FIG. 10B

FIG. 11A

FIG. 11B

EP 2 509 307 A1

# FIG. 12

20

Inputted picture signal

Motion vector value

Correlation value

Motion compensation strength

Outputted picture signal

| Motion vector estimation unit | Compensation strength determination unit | Interpolated picture generation unit |

21  22  13

## FIG. 13

## FIG. 14

FIG. 15A

FIG. 15B

## FIG. 16A

## FIG. 16B

FIG. 17

FIG. 18

Inputted picture signal

Motion vector value

Motion
vector
estimation
unit

11

Compensation
strength
determination
unit

42

Scroll information
Telop information

Motion
compensation
strength

Interpolated
picture
generation
unit

13

Outputted
picture signal

40

# FIG. 19

```
                    ┌─────────────┐
                    │    Start    │
                    └──────┬──────┘
                           │
                           ▼
     S102 ──┐  ┌──────────────────────────┐
            │  │   Estimate motion vector  │
               └──────────────┬────────────┘
                              │
                              ▼
     S104 ──┐  ┌──────────────────────────┐  ◄───┐
            │  │     Select focused block   │     │
               └──────────────┬────────────┘     │
                              │                   │
                              ▼                   │
     S106 ──┐  ┌──────────────────────────┐     │
            │  │    Calculate reliability   │     │
               └──────────────┬────────────┘     │
                              │                   │
                              ▼                   │
     S108 ──┐  ┌──────────────────────────┐     │
            │  │     Determine motion       │     │
            │  │   compensation strength    │     │
               └──────────────┬────────────┘     │
                              │                   │
                              ▼                   │
     S202 ──┐  ┌──────────────────────────┐     │
            │  │     Obtain scroll (telop)  │     │
            │  │       information          │     │
               └──────────────┬────────────┘     │
                              │                   │
                              ▼                   │
     S204 ──┐  ┌──────────────────────────┐     │
            │  │     Determine motion       │     │
            │  │ compensation strength again│     │
               └──────────────┬────────────┘     │
                              │                   │
                              ▼                   │
     S112 ──┐  ┌──────────────────────────┐     │
            │  │     Filtering processing   │     │
               └──────────────┬────────────┘     │
                              │                   │
                              ▼                   │
     S114 ──┐  ┌──────────────────────────┐     │
            │  │    Motion compensation     │     │
            │  │       processing           │     │
               └──────────────┬────────────┘     │
                              │                   │
                              ▼                   │
     S116 ──┐       ◇─────────────────◇    No    │
            │      ◇  All blocks have    ◇ ──────┘
                   ◇  been selected?     ◇
                    ◇─────────┬────────◇
                              │ Yes
                              ▼
                    ┌──────────────┐
                    │     End      │
                    └──────────────┘
```

## FIG. 20A

Phase of interpolated picture

Proper phase

Interpolation phase determined by reliability of motion vector

Low  Inter-  High
     mediate

## FIG. 20B

Phase of interpolated picture

Proper phase

Interpolation phase determined by reliability of motion vector

A

B

High

Possibility of scroll (telop)

EP 2 509 307 A1

## INTERNATIONAL SEARCH REPORT

| | International application No. |
|---|---|
| | PCT/JP2010/002316 |

A.   CLASSIFICATION OF SUBJECT MATTER
*H04N7/01*(2006.01)i, *G09G3/20*(2006.01)i

According to International Patent Classification (IPC) or to both national classification and IPC

B.   FIELDS SEARCHED

Minimum documentation searched (classification system followed by classification symbols)
H04N7/01, G09G3/20

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | WO 2008/102826 A1  (Sony Corp.),<br>28 August 2008 (28.08.2008),<br>paragraphs [0058] to [0087], [0382] to [0384];<br>fig. 8 to 10, 44, 45<br>& US 2009/0184916 A1    & US 2010/0013991 A1<br>& US 2010/0034272 A1    & EP 2059037 A1<br>& EP 2018052 A1         & EP 2059023 A1<br>& WO 2008/102826 A1     & WO 2008/102827 A1<br>& WO 2008/102828 A1     & CN 101543043 A<br>& CN 101543064 A        & CN 101543065 A | 1,5-7,10-12<br>2-4,8,9 |
| Y | JP 8-163573 A  (Matsushita Electric Industrial<br>Co., Ltd.),<br>21 June 1996 (21.06.1996),<br>paragraph [0055]<br>& US 5796437 A          & US 5886745 A | 2-4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 June, 2010 (04.06.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/002316

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-159300 A  (Toshiba Corp.),<br>16 July 2009 (16.07.2009),<br>paragraph [0022]<br>& US 2009/0167937 A1 | 8 |
| Y | JP 2009-181067 A  (Sharp Corp.),<br>13 August 2009 (13.08.2009),<br>paragraphs [0192], [0200]<br>(Family: none) | 9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008102826 A